# EUROPEAN PATENT SPECIFICATION

(11) **EP 3 725 547 B1**
(45) Date of publication and mention of the grant of the patent: **19.04.2023**
(21) Application number: 18888434.0
(22) Date of filing: 22.11.2018
(51) Int. Cl.: B60C 9/22, B60C 9/18, B60C 9/20, B29D 30/16, B29D 30/60, B29D 30/30, B29D 30/70

(54) **TIRE**
REIFEN
PNEUMATIQUE

(30) Priority: 13.12.2017 JP 2017238599
(43) Date of publication of application: 21.10.2020
(73) Proprietor: Bridgestone Corporation, Chuo-Ku Tokyo 104-8340 (JP)
(72) Inventor: KUWAHARA, Takashi, Tokyo 104-8340 (JP); TSURUDA, Seigo, Tokyo 104-8340 (JP); NARITA, Keigo, Tokyo 104-8340 (JP)
(74) Representative: Marks & Clerk LLP
(86) International application number: PCT/JP2018/043294
(87) International publication number: WO 2019/116862

(56) References cited:
- EP-A2- 0 921 019
- JP-A- S 649 005
- JP-A- H05 201 203
- JP-A- H08 132 819
- JP-A- S63 103 704
- JP-A- 2008 279 821
- JP-A- 2012 025 308
- JP-A- 2017 013 745
- US-A- 5 437 321

## Description

### TECHNICAL FIELD

The present invention relates to a tire provided with a belt layer that is structured by a cord wound in a helical shape.

### BACKGROUND ART

Heretofore, tires have been proposed (for example, see Japanese Patent Application Laid-Open (JP-A) No. 2016-193725) that are provided with a belt layer, known as a spiral belt, that is formed by winding a cord in a helical shape. Further tires with a spiral belt formed by winding a cord in a helical shape and provided with ring-shaped portion on the axial outer side portions of the belt are known from JP2008279821A and US5437321A.

### SUMMARY OF INVENTION

### TECHNICAL PROBLEM

The present inventors have conducted testing of tires and diverse investigations. As a result, the present inventors have discovered that, in a tire provided with a spiral belt layer structured by a cord wound in a helical shape, uniformity, and specifically radial force variation (RFV), is degraded as a result of length direction end portions of the cord being disposed at two belt width direction end portions of the spiral belt layer.

In consideration of the circumstances described above, an object of the present invention is to improve uniformity of a tire provided with a spiral belt layer that is structured with a cord wound in a helical shape.

### SOLUTION TO PROBLEM

A tire according to a first aspect includes: a spiral belt layer provided at an outer periphery side of a tire carcass member, the spiral belt layer being structured with a belt cord wound in a helical shape; and a ring-shaped band respectively disposed at a tire diameter direction outer side of each of an end portion of the spiral belt layer at one side in a tire width direction and an end portion of the spiral belt layer at the other side in the tire width direction, the band including a belt-shaped member that is wound at least one full circumference in a tire circumference direction. A region of the spiral belt layer in which a number of strands of the belt cord counted in the tire width direction is greater and a region in which the number is smaller are formed by one end portion and another end portion in the tire circumference direction of the belt cord being disposed at different positions in the tire circumference direction, and the band is specified with an overlap portion at which a number of layers of the belt-shaped member is greater than in another region of the band in the circumference direction, the overlap portion being provided at the region in which the number of strands of the belt cord is smaller.

Because the spiral belt layer is structured by winding of the cord in the helical shape, the end portions of the cord are disposed at one side and the other side in a belt width direction. Therefore, when the one end portion and the other end portion of the belt cord of the spiral belt layer are at different positions in the tire circumference direction, the region in which the number of strands of the belt cord counted in the tire width direction is smaller and the region in which the same number is greater are formed in the spiral belt layer. In other words, a region in which the belt width is greater and a region in which the belt width is smaller are formed in the spiral belt layer. Consequently, tire circumference direction bending stiffness is higher in the region in which the belt width is greater than in the region in which the belt width is smaller. As a result, uniformity, specifically RFV, of the tire provided with the spiral belt layer is degraded.

At the overlap of each band of the tire according to the first aspect, the number of layers of the belt-shaped member is larger than in the another region in the circumference direction, and the tire circumference direction bending stiffness is relatively higher than in the another region in the circumference direction. In the tire according to the first aspect, the width direction end portions of the spiral belt layer in which the end portions of the belt cord are disposed are covered by the bands, and the overlap portions of the bands are disposed in the region of the spiral belt layer in which the number of strands of the belt cord counted in the tire width direction is smaller. Thus, the tire circumference direction bending stiffness of a layer including the spiral belt layer and the bands may be made more uniform in the tire circumference direction, and the RFV may be improved compared to a structure without the bands.

In other words, because the overlap portions of the bands are disposed as described above, an RFV reaction force of the spiral belt layer may be raised in a region of the spiral belt layer in which the reaction force is small (a valley portion), and the RFV may be improved.

### ADVANTAGEOUS EFFECTS OF INVENTION

According to the present invention, an excellent effect is provided in that uniformity may be improved in a tire provided with a spiral belt layer that is structured with a cord wound in a helical shape.

### BRIEF DESCRIPTION OF DRAWINGS

Fig. 1 is a sectional diagram showing a tire according to a first exemplary embodiment of the present invention, which shows a state in which the tire is cut along a tire turning axis.
Fig. 2 is a plan view showing positional relationships of a spiral belt layer and bands.
Fig. 3 is an exploded perspective view showing the spiral belt layer and the bands.
Fig. 4 is a sectional diagram showing a tire according to a second exemplary embodiment of the present invention, which shows a state in which the tire is cut along the tire turning axis.
Fig. 5 is a tire exploded perspective view showing the tire according to the second exemplary embodiment of the present invention.
Fig. 6 is a graph showing an RFV curve of a tire 2 in which no band is provided.
Fig. 7 is a graph showing an RFV curve of a tire 1 in which bands are provided.
Fig. 8A is a perspective view showing a spiral belt layer of a tire according to an alternative example.
Fig. 8B is a graph showing an RFV curve of the same tire.
Fig. 9A is a perspective view showing a spiral belt layer of a tire according to a further alternative example.
Fig. 9B is a graph showing an RFV curve of the same tire.
Fig. 10 is a side view, seen along a tire turning axis, showing a band of a tire according to an alternative embodiment.

### DETAILED DESCRIPTION

### = First Exemplary Embodiment =

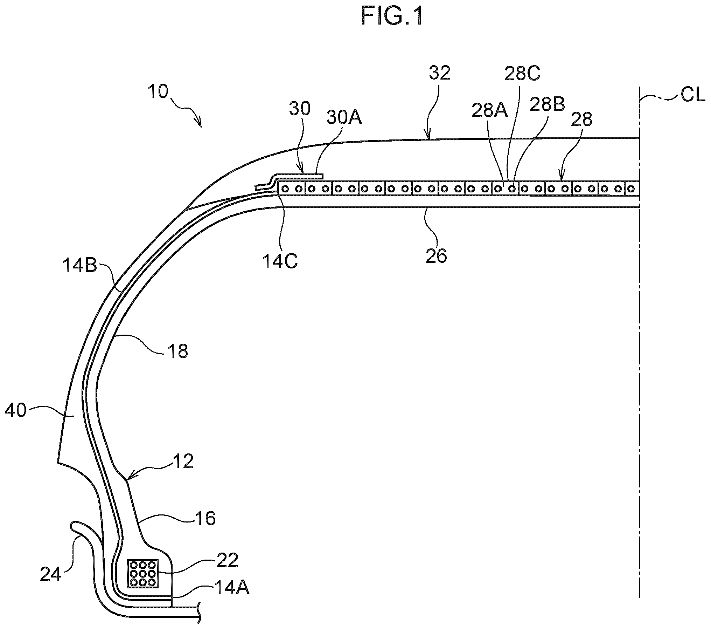

A tire 10 according to a first exemplary embodiment of the present invention is described in accordance with Fig. 1 to Fig. 3.

### - Tire Carcass Member -

As shown in Fig. 1, the tire 10 is, for example, a tire for use on an automobile. The tire 10 is provided with a tire carcass member 12. The tire carcass member 12 is fabricated of resin material. The tire carcass member 12 includes a bead portion 16, a side portion 18 that extends to a tire radius direction outer side of the bead portion 16, and a crown portion 26 that extends to a tire width direction inner side of the side portion 18. A tread 32 is disposed at the crown portion 26. The term "bead portion 16" as used herein is intended to include 30% of a tire sectional height of the tire carcass member 12 from the tire diameter direction inner side of the tire carcass member 12. The tire carcass member 12 is formed in a toroidal shape centered on a tire turning axis. As a resin material constituting the tire carcass member 12, thermoplastic resins (including thermoplastic elastomers), thermosetting resins and other general purpose resins may be mentioned, as well as engineering plastics (including super engineering plastics) and the like. The meaning of the term "resin material" as used herein is not intended to include vulcanized rubbers.

The meaning of the term "thermoplastic resin" (including thermoplastic elastomers) is intended to include polymer compounds of which the material softens and flows with a rise in temperature, and goes into a relatively hard and strong state when cooled. The present specification distinguishes between: polymer compounds of which the material softens and flows with a rise in temperature, goes into a relatively stiff and strong state when cooled, and features rubber-like resilience, which are referred to as thermoplastic elastomers; and polymer compounds of which the material softens and flows with a rise in temperature, goes into a relatively hard and strong state when cooled, and does not feature rubber-like resilience, which are referred to as thermoplastic resins that are not elastomers.

As a thermoplastic resin (which may be a thermoplastic elastomer), polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV) and the like may be mentioned, and also polyolefin-based thermoplastic resins, polystyrene-based thermoplastic resins, polyamide-based thermoplastic resins and polyester-based thermoplastic resins and the like.

An above-mentioned thermoplastic resin material that may be employed has, for example, a deflection temperature under load as defined in ISO 75-2 or ASTM D648 (0.45 MPa load) of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of 130°C.

The meaning of the term "thermoplastic resins" is intended to include polymer compounds that form a three-dimensional mesh structure in association with a temperature rise and harden. As thermoplastic resins, for example, phenol resins, epoxy resins, melamine resins, urea resins and the like may be mentioned.

A resin material that is used may be a previously known thermoplastic resin (which may be a thermoplastic elastomer) or thermosetting resin, and may be a general purpose resin such as a (meth)acrylic resin, an EVA resin, a vinyl chloride resin, a fluorine-based resin, a silicone-based resin or the like.

A bead core 22 is embedded in the bead portion 16. A thermoplastic material constituting the bead core 22 is preferably an olefin-based, ester-based, amide-based or urethane-based TPE, or a TPV in which a portion of a rubber-based resin is mixed. An above-mentioned thermoplastic resin material preferably has, for example, a deflection temperature under load as defined in ISO 75-2 or ASTM D648 (0.45 MPa load) of at least 75°C, a tensile yield elongation again as defined in JIS K7113 of at least 10%, a tensile elongation at break again as defined in JIS K7113 of at least 50%, and a Vicat softening temperature as defined in JIS K7113 (method A) of at least 130°C.

The bead core 22 has a toroidal shape and is formed of a thermoplastic material with a higher modulus of elasticity than the resin material of the tire carcass member 12. The modulus of elasticity of the bead core 22 is preferably at least 1.5 times the modulus of elasticity of the tire carcass member 12, and is more preferably at least 2.5 times the same. If the ratio of the modulus of elasticity is less than 1.5 times, then when the tire 10 is mounted to a rim 24 and filled with air, and the internal pressure of the tire 10 is raised, it is conceivable that the bead portion 16 will be lifted to the tire radius direction outer side and detach from the rim 24. The bead core 22 may employ a hard resin and be formed by insert-molding (extrusion-molding) or the like; a method of formation of the bead core 22 is not particularly limited.

The bead core 22 may be formed in a shape that includes waves in the tire circumference direction, such that a bead core radius varies with tire circumference direction position. In this case, the bead core 22 itself may be extensible to some extent. Thus, rim assembly is easier. The bead core 22 is not limited to resins (thermoplastic materials) and may be formed by bundling resin-coated steel cords with helical shapes in the tire circumference direction.

### - Spiral Belt Layer -

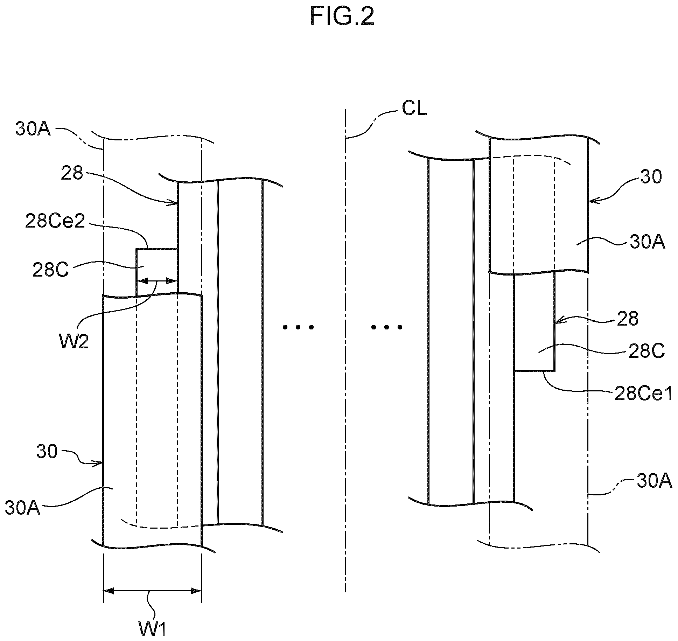

As shown in Fig. 1 and Fig. 2, a spiral belt layer 28 is provided at an outer periphery of the crown portion 26 of the tire carcass member 12. The spiral belt layer 28 is formed by winding a resin-coated cord 28C in the tire circumference direction into a helical shape. The resin-coated cord 28C is an example of a belt cord with a belt shape in which, for example, two cords 28B that are arrayed in parallel with one another are coated with a resin 28A. The spiral belt layer 28 covers substantially the whole of the crown portion 26. Steel cords are employed for the cords 28B according to the present exemplary embodiment, but cords other than steel cords may be employed, such as organic fibers or the like.

Accordingly, an end portion 28Ce1 at one side of the resin-coated cord 28C is disposed at one side of the spiral belt layer 28 in the width direction (for example, the left side in the drawings), and an end portion 28Ce2 at the other side of the resin-coated cord 28C is disposed at the other side of the spiral belt layer 28 in the width direction (for example, the right side in the drawings).

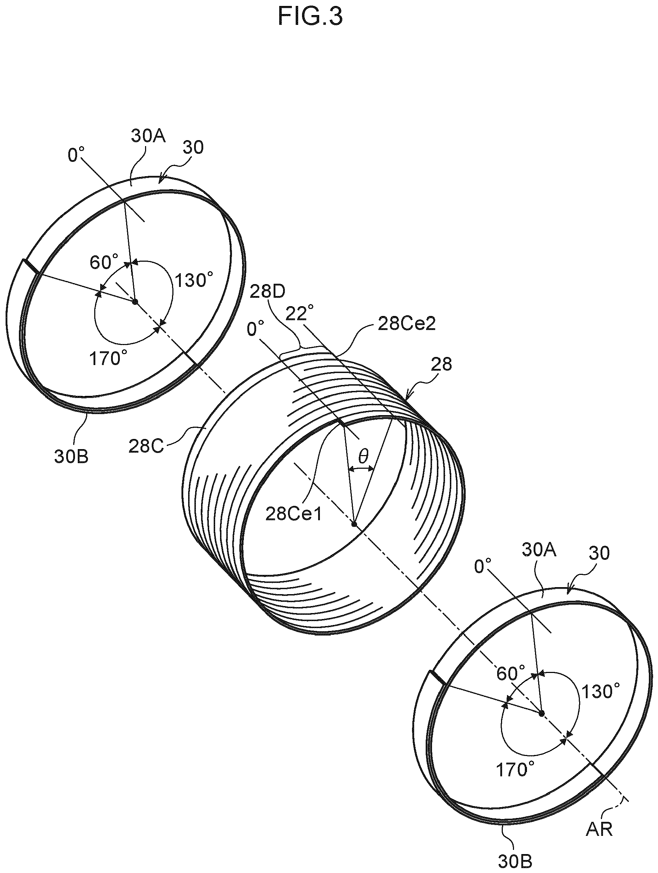

As shown in Fig. 3, in the spiral belt layer 28 according to the present exemplary embodiment, a circumference direction position of the end portion 28Ce1 at the length direction one side of the resin-coated cord 28C and a circumference direction position of the end portion 28Ce2 at the length direction other side of the resin-coated cord 28C are disposed to be offset by 22° in the circumference direction. In the spiral belt layer 28 according to the present exemplary embodiment, as an example, the end portion 28Ce1 of the resin-coated cord 28C is wound on first and the end portion 28Ce2 is wound on last. However, the end portion 28Ce2 may be wound on first and the end portion 28Ce1 may be wound on last. In the present exemplary embodiment, the resin-coated cord 28C is wound in a clockwise direction, but may be wound in the counterclockwise direction.

In the spiral belt layer 28 according to the present exemplary embodiment, the circumference direction position of the end portion 28Ce1 at the one side of the resin-coated cord 28C and the circumference direction position of the end portion 28Ce2 at the other side of the resin-coated cord 28C are arranged to be offset by 22° in the circumference direction. In other words, if the end portion 28Ce1 that is the start of winding of the resin-coated cord 28C is represented as an origin (0°), the end portion 28Ce2 that is the end of winding is disposed at 220° in the clockwise direction.

In the spiral belt layer 28 according to the present exemplary embodiment, a region of the resin-coated cord 28C in the circumference direction from the end portion 28Ce1 that is the start of winding to the end portion 28Ce2 that is the end of winding is referred to as an overlap region 28D.

In the present exemplary embodiment, if the spiral belt layer 28 is viewed in the circumference direction and a number of strands of the resin-coated cord 28C in the belt width direction is counted, the number is greater from the end portion 28Ce1 that is the start of winding of the resin-coated cord 28C (the origin 0°) to the 22° position than the number in other regions. Thus, the belt width from the end portion 28Ce1 (the origin 0°) to the 22° position is wider than the belt width in the other regions. That is, when the tire circumference direction bending stiffness of the spiral belt layer 28 is considered along the tire circumference direction, the tire circumference direction bending stiffness is higher from the end portion 28Ce1 (the origin 0°) to the 22° position than the bending stiffness in the other regions of the circumference direction.

### - Bands -

As shown in Fig. 1 to Fig. 3, bands 30 are disposed at the tire diameter direction outer sides of the end portion at the width direction one side of the spiral belt layer 28 and the end portion at the width direction other side of the spiral belt layer 28.

Each band 30 is formed by winding a belt-shaped member 30A a little more than one turn (at least one full circumference) directly in the tire circumference direction. The belt-shaped member 30A has a belt shape with a certain width, which includes plural fiber cords. The band 30 is provided with an overlap portion 30B, that is, a multilayer portion, at a portion in the circumference direction. At the overlap portion 30B, a portion at one side in the length direction of the belt-shaped member 30A and a portion at the other side in the length direction are superposed with one another in the diameter direction.

The fiber cords that are employed in the band 30 may be, for example, organic fiber cords of nylon, polyester, an aromatic polyamide or the like. However, steel cords may be employed, and publicly known materials of layers that are employed in ordinary pneumatic tires may be employed. The band 30 according to the present exemplary embodiment includes plural fiber cords. However, for example, the band 30 may not include fibers but be formed of a sheet-shaped member of a single resin material or a single rubber.

It is preferable if a bending stiffness of the band 30 to follow deformation of the tread is not more than a bending stiffness of the spiral belt layer 28. The cords of the band 30 may be covered with rubber or resin.

A width W1 of the belt-shaped member 30A constituting the band 30 is wider than a width W2 of the resin-coated cord 28C constituting the spiral belt layer 28.

A length direction end portion of the belt-shaped member 30A is cut orthogonally to the length direction of the belt-shaped member 30A, but may be cut at an angle.

As shown in Fig. 3, the overlap portion 30B of the band 30 according to the present exemplary embodiment is disposed at the opposite side of the tire rotation axis AR from the overlap region 28D of the spiral belt layer 28 (disposed at the opposite side of the tire rotation axis AR from the end portion 28Ce1 at one side of the resin-coated cord 28C and the end portion 28Ce2 at the other side). More specifically, treating the end portion 28Ce1 that is the start of winding of the resin-coated cord 28C as the origin (0°), the overlap portion 30B is in a range from a position 130° clockwise from the origin 0° to a position 170° further to clockwise (a position 300° from the origin 0°).

Therefore, in the band 30 according to the present exemplary embodiment, the tire circumference direction bending stiffness at the overlap portion 30B at which the belt-shaped member 30A is superposed is higher than the tire circumference direction bending stiffness in other regions in which the belt-shaped member 30A is not superposed.

As shown in Fig. 2, the band 30 at one side covers the end portion 28Ce1 at the one side of the resin-coated cord 28C and portions of the resin-coated cord 28C near to the width direction inner side of the end portion 28Ce1, and the band 30 at the other side covers the end portion 28Ce2 at the other side of the resin-coated cord 28C and portions of the resin-coated cord 28C near to the width direction inner side of the end portion 28Ce2.

Each band 30 may be formed to be wider and provided so as to cover the resin-coated cord 28C further to the width direction inner side. In the present exemplary embodiment, as an example, the width W2 of the resin-coated cord 28C is 5 mm and the width W1 of each belt-shaped member 30A is 12 mm. However, the width W2 of the resin-coated cord 28C is not limited to 5 mm, and the width W1 of the belt-shaped member 30A is not limited to 12 mm.

### - Tread -

As shown in Fig. 1, the tread 32 is provided at the tire radius direction outer side of the crown portion 26 and the spiral belt layer 28. The tread 32 is, for example, a pre-cured tread (PCT) that is formed using a rubber. The tread 32 is formed of a rubber with more excellent wear resistance than the resin material forming the tire carcass member 12. As this rubber, a rubber of the same kind as a tread rubber used in ordinary conventional pneumatic tires that employ rubber as a resilient material may be used; for example, a styrene-butadiene rubber (SBR) may be used. The tread 32 that is employed may be constituted of an alternative kind of resin material with more excellent wear resistance than the resin material forming the tire carcass member 12. In Fig. 1, drainage grooves of the tread 32 are not shown in the drawing, but conventional publicly known drainage grooves may be formed in the tread 32.

### - Reinforcement Layer -

A reinforcement layer 14 is disposed at an outer side face of the tire carcass member 12. In the reinforcement layer 14, plural cords (not shown in the drawings) are arranged in parallel with one another and are covered with a rubber material. The reinforcement layer 14 extends from the bead portion 16 to the side portion 18. For example, a reinforcement layer 14 with a similar structure to a carcass ply employed in a conventional pneumatic tire fabricated of rubber may be employed.

Each cord of the reinforcement layer 14 is, for example, a twisted cord or an assembly of filaments. A material of the cords of the reinforcement layer 14 is, for example, an aliphatic polyamide, polyethylene terephthalate, glass, alamide, or a metal such as steel or the like. In the reinforcement layer 14 according to the present exemplary embodiment, the cords extend in the tire radius direction. However, the cords may extend in a direction that is angled relative to the tire radius direction.

The reinforcement layer 14 is secured at the bead core 22 embedded in the bead portion 16. More specifically, a tire radius direction inner side end 14A of the reinforcement layer 14 passes the tire diameter direction inner side of the bead core 22 and is disposed at a tire inner face side.

A tire radius direction outer side end 14C of the reinforcement layer 14 reaches the spiral belt layer 28, via the tire carcass member 12 from the bead portion 16 to the side portion 18 and extending to the crown portion 26. The reinforcement layer 14 may extend as far as the tire width direction center. A position of the tire radius direction outer side end 14C of the reinforcement layer 14 may terminate in a vicinity of a tire maximum width position of the side portion 18, or may terminate before reaching the crown portion 26 (at a "buttress" portion).

The reinforcement layer 14 according to the present exemplary embodiment corresponds to a carcass layer in a conventional ordinary pneumatic tire fabricated of rubber.

A side rubber layer 40 is provided at a tire outer face 14B side of the reinforcement layer 14. The side rubber layer 40 may employ a rubber of the same type as a rubber that forms a sidewall in a conventional ordinary pneumatic tire that uses rubber as a resilient material. Further, the side rubber layer 40 may be a resin layer.

### - Operation -

Below, operation and effects of the tire 10 according to the present exemplary embodiment are described.

The spiral belt layer 28 is formed by the resin-coated cord 28C containing the cords 28B being wound in a helical shape, the end portion 28Ce1 being disposed at one side of the spiral belt layer 28 in the belt width direction, and the end portion 28Ce2 being disposed at the other side of the spiral belt layer 28 in the belt width direction. Consequently, the spiral belt layer 28 does not have constant width in the tire width direction; a region of greater width and a region of smaller width are formed in the circumferential direction. Therefore, when the bending stiffness of the spiral belt layer 28 is considered along the circumference direction, the tire circumference direction bending stiffness of the overlap region 28D is larger than the bending stiffness of other regions in the rest of the spiral belt layer 28. When, for example, an RFV curve of a tire that is not provided with the bands 30 is considered, reaction forces (in the tire diameter direction) in regions close to the overlap region 28D tend to be larger than in regions at the opposite side from the overlap region 28D.

In the tire 10 according to the present exemplary embodiment, because the width direction end portions of the spiral belt layer 28 at which the end portions of the resin-coated cord 28C are disposed are covered by the bands 30, and the overlap portions 30B of the bands 30 are disposed in a region of the spiral belt layer 28 with low bending stiffness, the tire circumference direction bending stiffness of a layer including the spiral belt layer 28 and the bands 30 may be made more uniform in the tire circumference direction. Thus, the RFV may be improved compared to a structure without the bands 30.

### = Second Exemplary Embodiment =

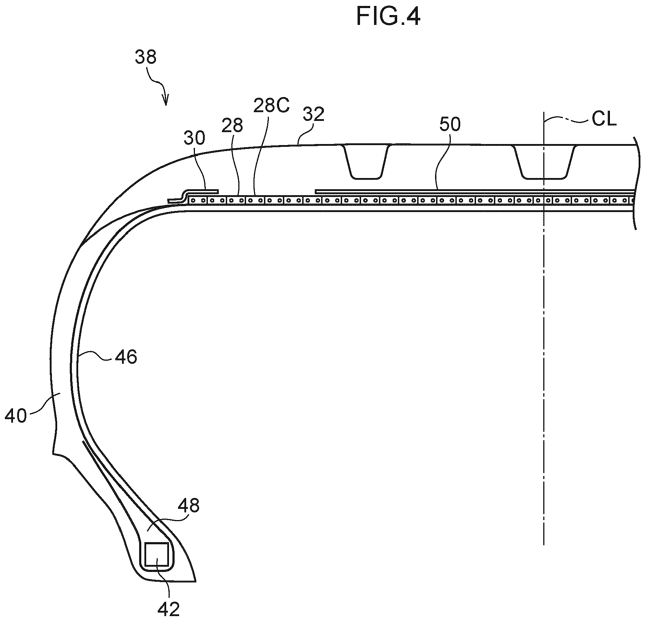

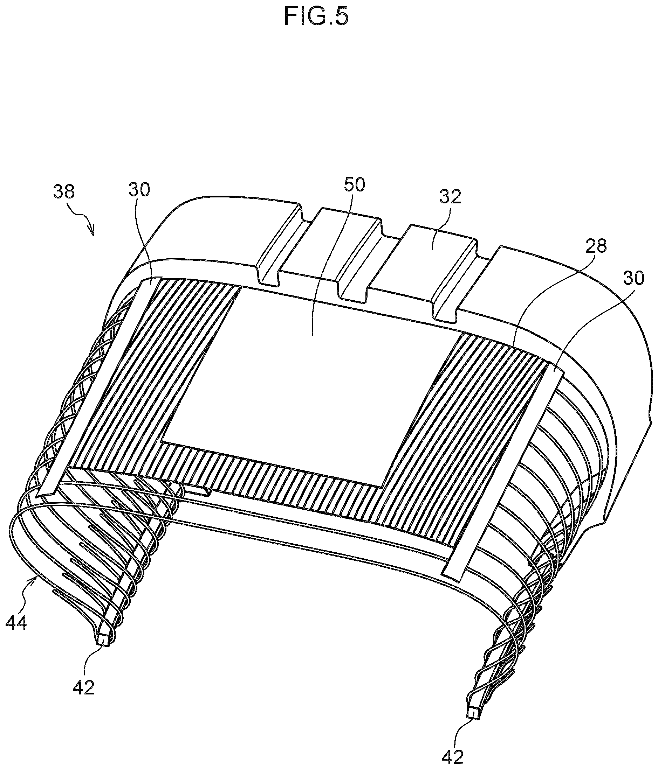

A tire 38 according to a second exemplary embodiment of the present invention is described in accordance with Fig. 4 and Fig. 5. Structures that are the same as in the first exemplary embodiment are assigned the same reference symbols and are not described here.

As shown in Fig. 4 and Fig. 5, the tire 38 according to the present exemplary embodiment is similar in structure to a conventional publicly known pneumatic tire apart from the bands 30. Accordingly, structures other than the bands 30 are described briefly. The tire 38 is provided with: a pair of bead cores 42; a carcass 44, which is an example of a tire carcass member, spanning between one of the bead cores 42 and the other of the bead cores 42; the spiral belt layer 28 disposed at the tire diameter direction outer side of the carcass 44; the tread 32 disposed at the tire diameter direction outer side of the spiral belt layer 28; the side rubber layer 40 disposed at the tire diameter direction outer side of the carcass 44; an inner liner 46 disposed at the tire inner face side of the carcass 44; and a bead filler 48 disposed between a main body portion and a folded back portion of the carcass 44.

Similarly to the first exemplary embodiment, the bands 30 are provided at the tire diameter direction outer side of the spiral belt layer 28 so as to cover the two tire width direction end portions of the spiral belt layer 28.

In the tire 38 according to the present exemplary embodiment, a reinforcement layer 50 is provided at a tire width direction central region of the spiral belt layer 28. However, the reinforcement layer 50 need not be provided.

The tire 38 according to the present exemplary embodiment differs from the tire 10 in the basic structure of the carcass. However, an operational effect of improving the RFV is similar to the first exemplary embodiment.

### = Examples =

To verify the effect of the present invention, a tire 1 and a tire 2 according to Examples were prepared. Tire 1 included the structures of the first exemplary embodiment described above. In tire 2, the bands were omitted from tire 1. The RFV of each tire was measured using an RFV tester.

Below, supplementary descriptions of structures of tires 1 and 2 are givent.
Tire size: 225/40R18
Air pressure: 200 kPa
Spiral belt layer: Formed by winding a belt cord with width 5 mm and thickness 2.6 mm, in which two steel cords with thickness 1.33 mm (1+6×0.34) are coated with resin.
Band: Formed by winding a belt-shaped member provided with six nylon cords with thickness 0.54 mm.

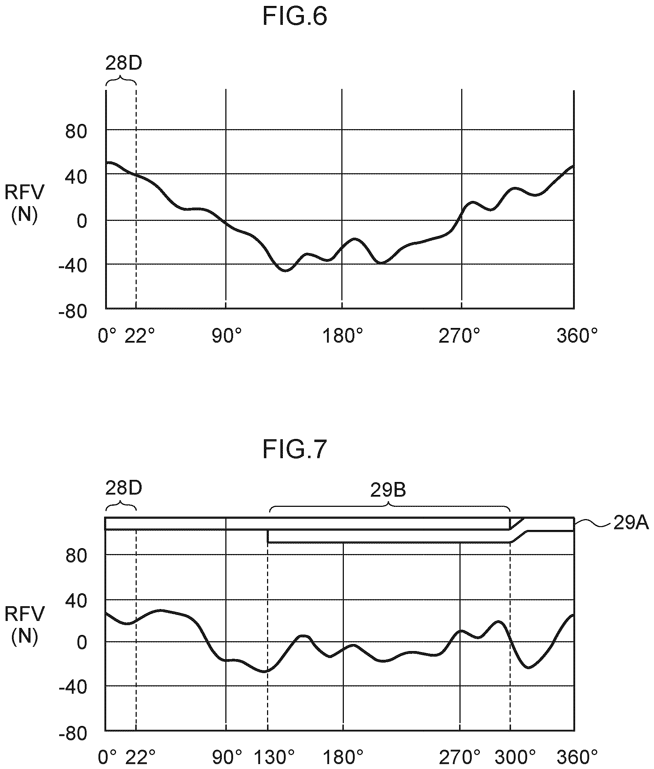

Fig. 6 shows the RFV curve of tire 2 and Fig. 7 shows the RFV curve of tire 1. From the RFV curve in Fig. 6 and the RFV curve in Fig. 7, it can be seen that the RFV is improved in tire 1 that employs the present invention. Furthermore, the difference between a maximum value and minimum value of the RFV curve of tire 1 is 97 N, and the difference between a maximum value and minimum value of the RFV curve of tire 1 is 56 N. Thus, it can be seen that a large improvement effect is provided by application of the present invention.

### = Alternative Embodiments =

Hereabove, exemplary embodiments of the present invention are described. The present invention is not limited by these descriptions and it will be clear that numerous modifications beyond these descriptions may be embodied within a technical scope not departing from the gist of the invention.

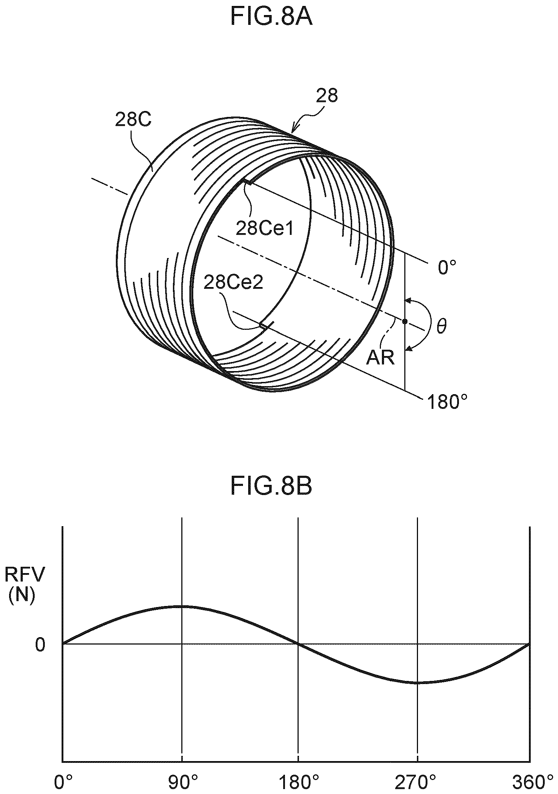

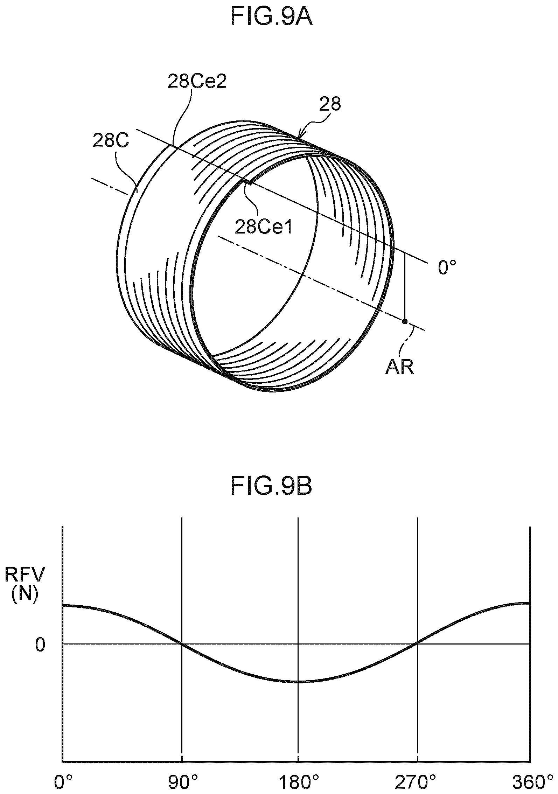

In the spiral belt layer 28 according to the first exemplary embodiment, the end portion 28Ce1 at the one side of the resin-coated cord 28C and the end portion 28Ce2 at the other side are disposed to be offset by 22° in the tire circumference direction, but the present invention is not limited thus. For example, as illustrated in Fig. 8A, the end portion 28Ce1 at the one side and the end portion 28Ce2 at the other side may be disposed to be offset by 180° in the circumference direction or, as illustrated in Fig. 9A, the end portion 28Ce1 at the one side and the end portion 28Ce2 at the other side may be disposed to not be offset in the circumference direction.

An RFV curve of, for example, a configuration of the spiral belt layer 28 in which the end portion 28Ce1 at the one side of the resin-coated cord 28C and the end portion 28Ce2 at the other side are disposed to be offset by 180° in the circumference direction as shown in Fig. 8A is schematically shown in Fig. 8B (the number of strands of the resin-coated cord 28C in the region from 0° to 180° is greater than in the region from 180° to 360°). In this configuration, it is preferable if the overlap portion 30B of each band 30 is disposed in the vicinity of 270° to raise the valley portion of the RFV curve.

Further, an RFV curve of a configuration of the spiral belt layer 28 in which the end portion 28Ce1 at the one side of the resin-coated cord 28C and the end portion 28Ce2 at the other side are not offset by 180° in the circumference direction as shown in Fig. 9A is schematically shown in Fig. 9B, in which the valley portion of the RFV curve is formed at a circumference direction position at the opposite side from the end portion 28Ce1 at the one side and the end portion 28Ce2 at the other side. Accordingly, in this configuration it is preferable if the overlap portion 30B of the band 30 is disposed in the vicinity of 180° to raise the valley portion of the RFV curve.

In any case, an RFV curve may be improved by disposing the overlap portion 30B of the band 30 at a position corresponding to a valley portion of the RFV curve (if the band 30 were absent) to raise the valley portion of the RFV curve. It is sufficient that a length in the circumference position and position in the circumference direction of the overlap portion 30B are suitably altered in accordance with the length, position and the like of the overlap region 28D of the spiral belt layer 28 and that the overlap portion 30B is suitably disposed in accordance with the RFV curve of the tire if the band 30 were absent.

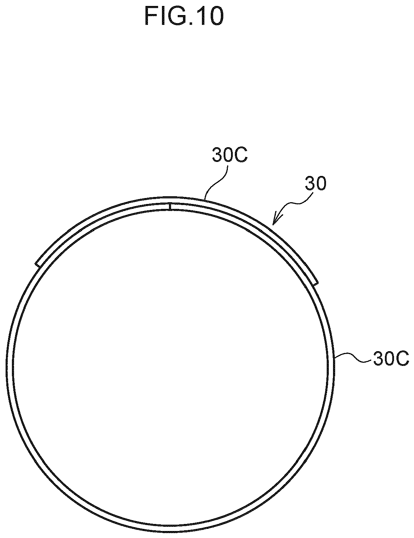

In the tire 30 according to the exemplary embodiments described above, the overlap portion 30B is formed by a portion at one side in the length direction of the belt-shaped member 30A and a portion at the other side in the length direction being superposed with one another in the diameter direction. However, for example, as illustrated in Fig. 10, the overlap portion 30B may be formed by mating and joining circumferential direction end portions of a single circumference winding of the belt-shaped member 30A with one another and then attaching a belt-shaped member 30C, which has a short length in the circumference direction, to the diameter direction outer side of the joining region.

The present invention may be applied to a side-reinforcement-type run-flat tire in which a reinforcing layer formed of stiff rubber or the like is provided in a tire side portion. The present invention is not limited to tires for four-wheel vehicles and may be applied to tires for two-wheel vehicles.

## Claims

1. A tire (10) comprising
a spiral belt layer (28) provided at an outer periphery side of a tire carcass member (12), the spiral belt layer being structured with a belt cord wound in a helical shape; and
a ring-shaped band (30) respectively disposed at a tire diameter direction outer side of each of an end portion (28Ce1) of the spiral belt layer (28) at one side in a tire width direction and an end portion (28Ce2) of the spiral belt layer at another side in the tire width direction, the band (30) including a belt-shaped member (30A) that is wound at least one full circumference in a tire circumference direction,
wherein:
a region of the spiral belt layer in which a number of strands of the belt cord (28B) counted in the tire width direction is greater and a region in which the number is smaller are formed by one end portion and another end portion in the tire circumference direction of the belt cord being disposed at different positions in the tire circumference direction, and
the band (30) is provided with an overlap portion (30B) at which a number of layers of the belt-shaped member (30A) is greater than in another region of the band in the circumference direction, the overlap portion (30B) being provided at the region in which the number of strands of the belt cord is smaller.

2. A tire (10) comprising
a spiral belt layer (28) provided at an outer periphery side of a tire carcass member (12), the spiral belt layer being structured with a belt cord wound in a helical shape; and
a ring-shaped band (30) respectively disposed at a tire diameter direction outer side of each of an end portion (28Ce1) of the spiral belt layer at one side in a tire width direction and an end portion (28Ce2) of the spiral belt layer at another side in the tire width direction, the band (30) including a belt-shaped member (30A) that is wound at least one full circumference in a tire circumference direction,
wherein:
one end portion and another end portion in the tire circumference direction of the belt cord of the spiral belt layer (28) are disposed at a same position in the tire circumference direction, and
the band (30) is provided with an overlap portion (30B) at which a number of layers of the belt-shaped member (30A) is greater than in another region of the band in the circumference direction,
the overlap portion (30B) being provided at a position that does not coincide with the one end portion (28Ce1) and the other end portion (28Ce2) of the belt cord in the tire circumference direction

3. The tire according to claim 1 or claim 2, wherein the overlap portion is formed by a portion at one side and a portion at another side in the tire circumference direction of the belt-shaped member (30A) being superposed with one another

4. The tire according to any one of claims 1 to 3, wherein:
the belt cord is a steel cord, and
the band includes an organic fiber cord.

## Patentansprüche

1. Reifen (10), der Folgendes umfasst:
eine Spiralgürtellage (28), die an einer äußeren Umfangsseite eines Reifenkarkassenelements (12) bereitgestellt wird, wobei die Spiralgürtellage mit einem Gürtelkord strukturiert ist, der in einer schraubenförmigen Gestalt gewunden ist, und
ein ringförmiges Band (30), die jeweils an einer in Reifendurchmesserrichtung äußeren Seite sowohl eines Endabschnitts (28Ce1) der Spiralgürtellage (28) an einer Seite in einer Reifenbreitenrichtung als auch eines Endabschnitts (28Ce2) der Spiralgürtellage an einer anderen Seite in der Reifenbreitenrichtung angeordnet sind, wobei das Band (30) ein gürtelförmiges Element (30A) einschließt, das mindestens einen vollen Umfang in einer Reifenumfangsrichtung gewunden ist, wobei:
ein Bereich der Spiralgürtellage, in dem eine Anzahl von Strängen des Gürtelkords (28B), gezählt in der Reifenbreitenrichtung, größer ist, und ein Bereich, in dem die Anzahl kleiner ist, durch einen Endabschnitt und einen anderen Endabschnitt in der Reifenumfangsrichtung des Gürtelkords gebildet werden, die an unterschiedlichen Positionen in der Reifenumfangsrichtung angeordnet sind, und
das Band (30) mit einem Überlappungsabschnitt (30B) versehen ist, an dem eine Anzahl von Lagen des gürtelförmigen Elements (30A) größer ist als in einem anderen Bereich des Bandes in der Umfangsrichtung, wobei der Überlappungsabschnitt (30B) an dem Bereich bereitgestellt wird, in dem die Anzahl von Strängen des Gürtelkords kleiner ist.

2. Reifen (10), der Folgendes umfasst:
eine Spiralgürtellage (28), die an einer äußeren Umfangsseite eines Reifenkarkassenelements (12) bereitgestellt wird, wobei die Spiralgürtellage mit einem Gürtelkord strukturiert ist, der in einer schraubenförmigen Gestalt gewunden ist, und
ein ringförmiges Band (30), die jeweils an einer in Reifendurchmesserrichtung äußeren Seite sowohl eines Endabschnitts (28Ce1) der Spiralgürtellage an einer Seite in einer Reifenbreitenrichtung als auch eines Endabschnitts (28Ce2) der Spiralgürtellage an einer anderen Seite in der Reifenbreitenrichtung angeordnet sind, wobei das Band (30) ein gürtelförmiges Element (30A) einschließt, das mindestens einen vollen Umfang in einer Reifenumfangsrichtung gewunden ist, wobei:
ein Endabschnitt und ein anderer Endabschnitt in der Reifenumfangsrichtung des Gürtelkords der Spiralgürtellage (28) an einer gleichen Position in der Reifenumfangsrichtung angeordnet sind und
das Band (30) mit einem Überlappungsabschnitt (30B) versehen ist, an dem die Anzahl von Lagen des gürtelförmigen Elements (30A) größer ist als in einem anderen Bereich des Bandes in der Umfangsrichtung,
wobei der Überlappungsabschnitt (30B) an einer Position bereitgestellt wird, die nicht mit dem einen Endabschnitt (28Ce1) und dem anderen Endabschnitt (28Ce2) des Gürtelkords in der Reifenumfangsrichtung übereinstimmt.

3. Reifen nach Anspruch 1 oder Anspruch 2, wobei der Überlappungsabschnitt durch einen Abschnitt an einer Seite und einen Abschnitt an einer anderen Seite in der Reifenumfangsrichtung des gürtelförmigen Elements (30A) gebildet wird, die miteinander überlagert sind.

4. Reifen nach einem der Ansprüche 1 bis 3, wobei:
der Gürtelkord ein Stahlkord ist und
das Band einen Kord aus organischer Faser einschließt.

## Revendications

1. Pneumatique (10), comprenant :
une couche de ceinture en spirale (28) fournie au niveau d'un côté périphérique externe d'un élément de carcasse du pneumatique (12), la couche de ceinture en spirale étant structurée avec un câblé de ceinture enroulé en une forme hélicoïdale ; et
une bande de forme annulaire (30), disposées respectivement au niveau d'un côté externe, dans la direction diamétrale du pneumatique, de chacune d'une partie d'extrémité (28Ce1) de la couche de ceinture en spirale (28) au niveau d'un côté, dans une direction de la largeur du pneumatique, et d'une partie d'extrémité (28Ce2) de la couche de ceinture en spirale au niveau d'un autre côté, dans la direction de la largeur du pneumatique, la bande (30) incluant un élément en forme de ceinture (30A) qui est enroulé sur au moins une circonférence entière, dans une direction circonférentielle du pneumatique, dans lequel :
une région de la couche de ceinture en spirale dans laquelle un nombre de brins du câblé de ceinture (28B) comptés dans la direction de la largeur du pneumatique, est plus grand, et une région dans laquelle le nombre est plus petit, sont formées par une partie d'extrémité et une autre partie d'extrémité, dans la direction circonférentielle du pneumatique, du câblé de ceinture, disposées au niveau de positions différentes dans la direction circonférentielle du pneumatique ; et
la bande (30) est pourvue d'une partie à chevauchement (30B) au niveau de laquelle un nombre de couches de l'élément en forme de ceinture (30A) est plus grand que dans une autre région de la bande, dans la direction circonférentielle, la partie à chevauchement (30B) étant fournie au niveau de la région dans laquelle le nombre de brins du câblé est plus petit.

2. Pneumatique (10), comprenant :
une couche de ceinture en spirale (28) fournie au niveau d'un côté périphérique externe d'un élément de carcasse du pneumatique (12), la couche de ceinture en spirale étant structurée avec un câblé de ceinture enroulé en une forme hélicoïdale ; et
une bande de forme annulaire (30), disposées respectivement au niveau d'un côté externe, dans la direction diamétrale du pneumatique de chacune d'une partie d'extrémité (28Ce1) de la couche de ceinture en spirale au niveau d'un côté, dans une direction de la largeur du pneumatique, et d'une partie d'extrémité (28Ce2) de la couche de ceinture en spirale au niveau d'un autre côté, dans la direction de la largeur du pneumatique, la bande (30) incluant un élément en forme de ceinture (30A) enroulé au moins sur une circonférence entière, dans une direction circonférentielle du pneumatique, dans lequel :
une partie d'extrémité et une autre partie d'extrémité, dans la direction circonférentielle du câblé de ceinture de la couche de ceinture en spirale (28), sont disposées au niveau d'une même position, dans la direction circonférentielle du pneumatique ; et
la bande (30) est pourvue d'une partie à chevauchement (30B) au niveau de laquelle un nombre de couches de l'élément en forme de ceinture (30A) est plus grand que dans une autre région de la bande, dans la direction circonférentielle ;
la partie à chevauchement (30B) étant fournie au niveau d'une position qui ne coïncide pas avec ladite une partie d'extrémité (28Ce1) et l'autre partie d'extrémité (28Ce2) du câblé de ceinture, dans la direction circonférentielle du pneumatique.

3. Pneumatique selon la revendication 1 ou la revendication 2, dans lequel la partie à chevauchement est formée par une partie au niveau d'un côté et d'une partie au niveau d'un autre côté, dans la direction circonférentielle du pneumatique, de l'élément en forme de ceinture (30A), superposées l'une à l'autre.

4. Pneumatique selon l'une quelconque des revendications 1 à 3, dans lequel :
le câblé de ceinture est un câblé en acier ; et
la bande inclut un câblé de fibres organiques.
